# EUROPEAN PATENT SPECIFICATION

(11) **EP 3 657 049 B1**
(45) Date of publication and mention of the grant of the patent: **30.03.2022**
(21) Application number: 18382850.8
(22) Date of filing: 26.11.2018
(51) Int. Cl.: F16H 61/32

(54) **GEARBOX ACTUATOR**
GETRIEBESTELLGLIED
ACTIONNEUR DE BOÎTE DE VITESSES

(43) Date of publication of application: 27.05.2020
(73) Proprietor: Fico Triad, S.A., 08028 Barcelona (ES)
(72) Inventor: Gimeno Grané, Santiago, 08232 Viladecavalls (ES); Ferrer Ribas, Óscar, 08232 Viladecavalls (ES)
(74) Representative: ZBM Patents - Zea, Barlocci & Markvardsen

(56) References cited:
- WO-A1-2018/206104
- CN-A- 1 267 608
- US-A1- 2015 337 957

## Description

The present invention relates to motor vehicle transmissions and specifically to gearbox actuators for remotely actuating a gearbox in a vehicle shift-by-wire transmission.

### BACKGROUND ART

A gearbox actuator is known in the art for remotely actuating a gearbox in a motor vehicle automatic transmission such as of the shift-by-wire type. In shift-by-wire type vehicle transmissions, a shift signal from a user of a vehicle is translated into a rotation of a transmission shift shaft for changing a transmission mode. Known transmission modes in a vehicle automatic transmission are, for example, park mode, reverse mode, neutral mode, and drive mode.

Known gearbox actuators use an electric motor for actuating the vehicle automatic transmission gearbox via a gear train. One of the difficulties encountered in such actuators is that not all of the transmission modes require the same physical parameters. For example, some transmission modes require higher amounts of torque than others. For this purpose, high gear ratio systems are provided comprising gears having different diameters from each other. In general, this implies large overall dimensions rendering the gearbox actuators bulky.

US2015337957 discloses a shift actuator for a shift-by-wire transmission in motor vehicles. The shift actuator comprises a motor that drives a first gear engaging a second gear that is associated with a worm gear. The worm gear in turn engages a third gear attached to a variable radius toothed element. The toothed element engages a toothed end face arranged in a variable radius rotatable output lever. Such prior art actuator still requires large diameter rotating parts for the purpose of providing the required torque for changing between different transmission modes. There is thus a need for a gearbox actuator capable of providing suitable torque values for changing between transmission modes while the actuator overall dimensions are reduced.

### SUMMARY

A gearbox actuator according to claim 1 is provided for remotely actuating a gearbox in a motor vehicle transmission to shift different gearshift positions (Park - no Park (P-nP), or P-R-N-D-X) by transforming electric energy via an electric motor into motion when a request by a user is remotely sent by the gearbox actuator to a vehicle gearbox. With the present gearbox actuator , according to claim 1, the above disadvantages are overcome. A number of advantages have found to be also obtained.

The present gearbox actuator is connected to the gearbox in a motor vehicle transmission through a connecting element that may comprise a shaft, a control wire or in some cases a combination of both, i.e. a shaft and wire connected to each other.

More specifically, the connecting element may comprise a control wire running within a conduit, and a shaft comprising first and second shaft elements. The first shaft element is attached to the toothed rack and to the control wire and the second shaft element is attached to the control wire and to a gearbox end fitting. The connecting element further comprises first and second shaft guides within which the first and second shaft elements are allowed to move. The connecting element further comprises first and second conduit end fittings attached to the first and second shaft guides respectively. Said first and second conduit end fittings are being fixed to the motor vehicle. The control wire conduit extends between the first and second conduit end fittings.

The gearbox actuator further comprises a first driving gear and a motor arranged to drive said first driving gear for transferring torque to the gearbox through the connecting element. A second driven gear is also provided engaging the first driving gear. The second driven gear is associated with a worm gear. A third driven gear is also provided engaging said worm gear. A toothed element is also provided attached to or formed integral with the third driven gear. The toothed element may be a toothed segment, that is, with teeth provided on part of a side surface thereof. The toothed element could be also a cylindrical gear with teeth provided over an entire side surface thereof.

A toothed rack extending along a rack extending axis is also provided. The toothed rack engages the toothed element and is attached to the connecting element to be displaced linearly. The rack extending axis defines the direction along which the toothed rack can be driven. The toothed rack comprises a toothed surface that is inclined at an angle with respect to the rack extending axis. That is, the teeth in said toothed rack surface lie on a plane that is inclined at an angle with respect to the rack extending axis.

The toothed rack may be attached to the connecting element through a joint where necessary, for example a ball joint. The toothed rack attachment may be fixed, with no translation and rotation, for example using a control wire, or with at least some rotation such as by direct attachment to shaft, for example.

The toothed element comprises a toothed curved surface having a variable radius with respect to an axis of rotation of the third driven gear. Specifically, the toothed curved surface of the toothed element may have a major radius and a minor radius with respect to the axis of rotation of the third driven gear. As a result, the variable radius toothed element and the inclined toothed rack both define a variable pitch gearing. The toothed element thus continuously engages the toothed rack with a variable gear ratio. For the purposes of the present gearbox actuator for example in operating a motor vehicle transmission, it may be preferred that said toothed element major radius is between 1.5-5 times said toothed element minor radius, and optimally 3 times, for example. The linear movement of the toothed rack comes from the toothed element. When the radius of the toothed element is small, the distance travelled by the rack is short, while when the radius of the toothed element is large, the distance travelled by the rack is long.

The angle of inclination of the toothed rack with respect to the rack extending axis as well as its stroke depends on the toothed element radius ratio. Said angle of inclination is in the range of 10-45° with 22.5° being preferred.

As stated above, the toothed surface of the toothed rack is inclined at an angle with respect to the rack extending axis. The slope of the rack toothed surface may be preferred to be such that a transmission ratio in an initial position, where the connecting element is away from the gearbox, is larger than that in a final position, where the connecting element is close to the gearbox. This is advantageous in changing gearshift positions requiring high torque such as for example when moving out of any gearshift position, i.e. parking, neutral, reverse, or drive.

With the above configuration, the first driving gear and the second driven gear both define a first gear stage where respective axes of rotation of the first driving gear and the second driven gear are parallel. A gear ratio of the first gear stage may be, for example, 1/1.5-1/7, with 1/2.6 being preferred. The worm gear and the third driven gear both define a second gear stage where respective axes of rotation of the worm gear and the third driven gear are perpendicular. A gear ratio of the second gear stage may be, for example, 1/24-1/48 with 1/36 being preferred. In general, it may be preferred that the first and second gear stages are configured to provide an overall gear ratio within a range of 1/400 - 1/75, such that at the beginning of the connecting element stroke, greater force is exerted slowly by the gearbox actuator and at the end of the connecting element stroke, less force is exerted rapidly by the gearbox actuator.

The following specifications for the gear stages of the present gearbox actuator, either alone or in combination, may be preferred:
- worm gear pressure angle = 10-16°, such as 13°
- worm gear pitch angle = 5-15° such as 9°
- first driving gear pressure angle = 14.5° - 25° with 22.5° being preferred
- second driven gear pressure angle = 14.5° - 25°
- toothed element pressure angle = 14.5° - 25°
- toothed rack pressure angle = 14.5° - 25°

The first driving gear and the second driven gear may comprise helical gears in which case a pressure angle thereof may be of 20°. If required, the toothed element and the toothed rack could comprise helical gears.

In one example, the third driven gear may be arranged to rotate up to 140° to provide a linear stroke of the connecting element of 50 mm. In general, the configuration of the present gearbox actuator 100 may be suitable for providing a stroke ranging from 20 mm to 50 mm in depending on requirements.

With the particular configuration of the present gearbox actuator, a wide range of linear strokes can be performed under a required torque regardless the gearshift position. With this configuration, a smaller motor can be used, and packaging and weight are advantageously reduced. The gearbox actuator can be arranged at any desired position remotely from the gearbox using a transmission cable or a shaft if required so that it can be easily adapted to user requirements.

### BRIEF DESCRIPTION OF THE DRAWINGS

Embodiments of the present invention will be described in the following, with reference to the appended drawings, in which:
Figure 1 is a general perspective view of a gearbox actuator for remotely actuating a gearbox in a motor vehicle transmission is shown;
Figures 2 and 3 are respective elevational views of the gearbox actuator in figure 1 illustrated at different connecting element stroke points;
Figure 4 is a general perspective view of one embodiment of the gearbox actuator where the connecting element comprises a control wire,
Figure 5 is a cross-sectional view of a first example of a connection between shaft element and control wire; and
Figure 6 is a cross-sectional view of a second example of a connection between shaft element and control wire.

### DETAILED DESCRIPTION

In the non-limiting embodiment shown in the figures of the drawings, the gearbox actuator has been indicated at 100. The gearbox actuator 100 is configured for remotely actuating a gearbox 200 in a motor vehicle transmission for the purpose of shifting different gearshift on request by a user.

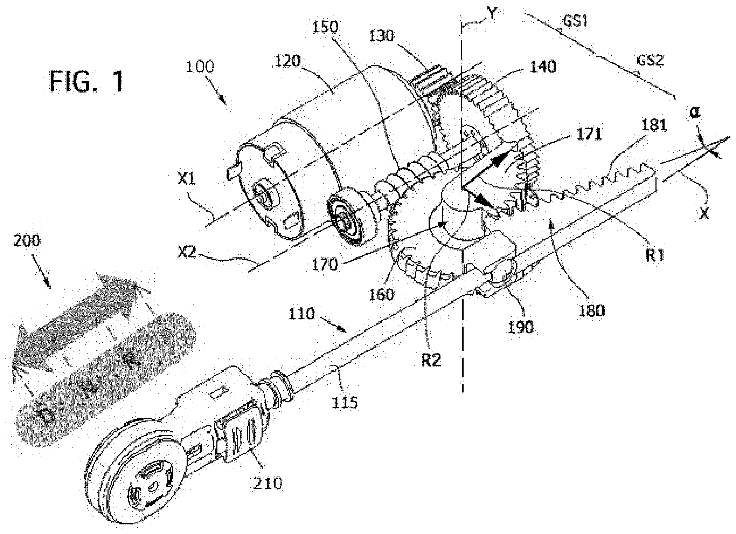

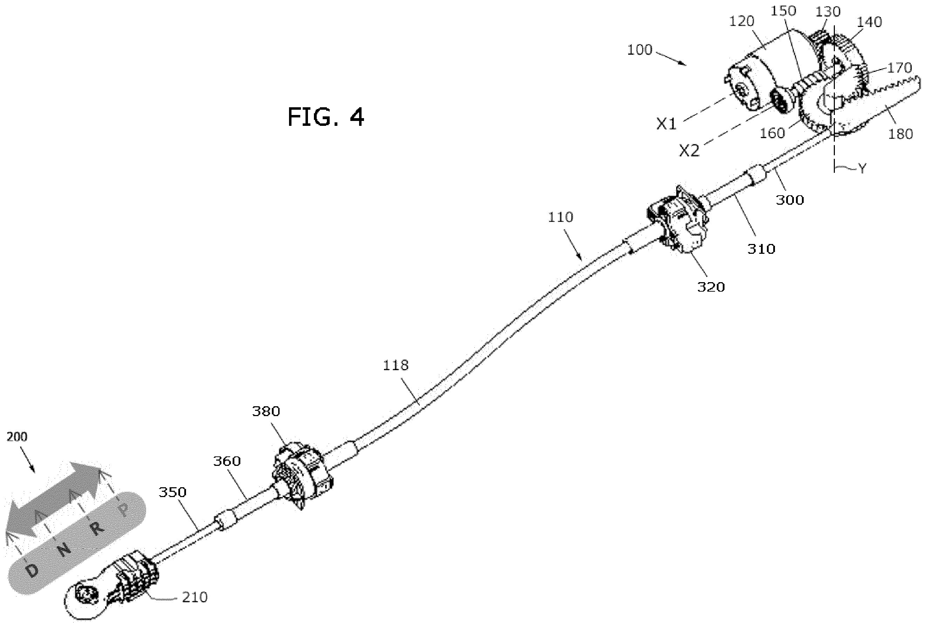

The gearbox actuator 100 is connected to the gearbox 200 via a connecting element 110. The connecting element 110 comprises a shaft 115 in the embodiment shown in figures 1-3. However, other embodiments are envisaged where the connecting element 110 comprises a control wire 118, as shown in figure 4, connected to shaft 115. In further embodiments, the connecting element 110 may comprise only a control wire 118. The shaft 115 has a first end 116 attached, through a gearbox end fitting 210, to the gearbox 200, and a second, opposite end 117. The same configuration applies to the embodiment where the connecting element 110 comprises a control wire 118.

An electric motor 120 such as for example a DC or BLDC motor is provided for transferring torque to the gearbox 200 through the connecting element 110 through gear stages GS1, GS2 that will be described in detail below. The electric motor 120 is thus configured to transform electric energy into motion when a request by a user is remotely sent by an electronic gearshift device (eShifter) to the gearbox actuator 100.

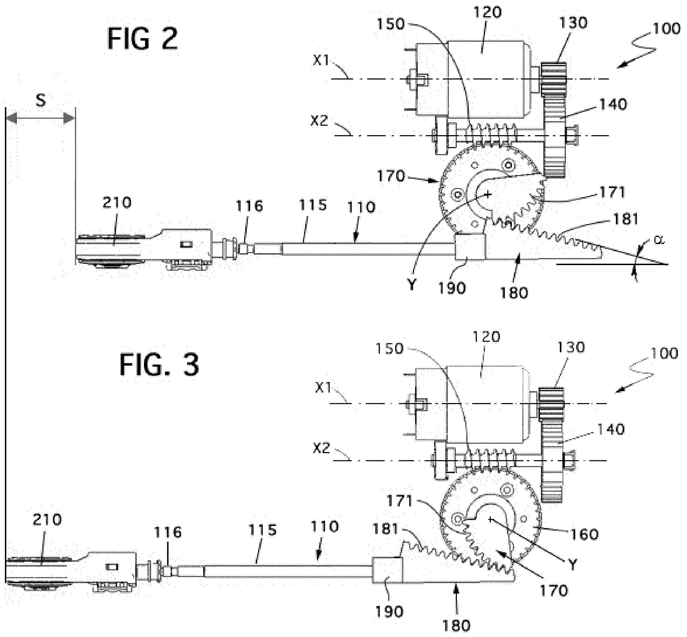

A first driving gear 130 driven in rotation by the above mentioned electric motor 120 is provided. The first driving gear 130 engages a second driven gear 140. The first driving gear 130 and the second driven gear 140 comprise in this embodiment helical gears, with a pressure angle of 20°. The second driven gear 140 in turn engages a worm gear 150. The worm gear 150 may be configured with a pressure angle of, for example, 13°, and a pitch angle of, for example, 9°. A third driven gear 160 is also provided engaging said worm gear 150. The third driven gear 160 is adapted to rotate up to 140° to provide a linear stroke S of the connecting element 110 of 50 mm as shown in figure 2 and 3.

A toothed element 170 is also provided. The toothed element 170 is attached to or formed integral with the third driven gear 160 so both are driven together in rotation by the worm gear 150. In the embodiment shown, the toothed element 170 is a toothed segment with teeth provided on part of a side surface thereof defining a toothed curved surface 171. The toothed element 170, may however be a cylindrical gear with teeth provided over the entire side surface thereof. In any case, the toothed element 170 may have a pressure angle of about 14.5° - 25°, such as for example 22.5°. Also in this embodiment, the toothed element 170 has an eccentric configuration defined said toothed curved surface 171 having major radius R1 and a minor radius R2 with respect to the axis of rotation Y of the third driven gear 160 as shown in the figure. In the embodiment shown the major radius R1 is three times the minor radius R2.

The toothed curved surface 171 of the toothed element 170 engages a toothed surface 181 of a toothed rack 180. The toothed rack 180 is arranged extending along a rack extending axis X. The toothed rack 180 is attached to the connecting element 110 through a ball joint 190 so as to be displaced linearly and also accommodating a slight lateral movement.

As shown in the figure, the rack extending axis X defines a direction along which the toothed rack 180 can be driven as the toothed element 170 is rotated.

The toothed rack 180 comprises a toothed surface 181 engaging the toothed curved surface 171 of the toothed element 170. The toothed surface 181 is inclined at an angle a with respect to the rack extending axis X. The teeth in the toothed surface 181 have a pressure angle of about 14.5° - 25°, such as for example 22.5°. In the embodiment herein disclosed, a preferred value for angle α is 22.5°, although other different values within the range of 10-45° are possible.

The eccentric configuration with variable radius R1, R2 of the toothed element 170 combined with the inclined toothed surface 181 of the toothed rack 180 define a variable pitch gearing. Thus, when a portion of the toothed curved surface 171 of the toothed element 170 corresponding to the small radius R2 is engaging the toothed surface 181 of the toothed rack 180, a distance travelled by the toothed rack 180 is short. When a portion of the toothed curved surface 171 of the toothed element 170 corresponding to the major radius R1 is engaging the toothed surface 181 of the toothed rack 180, a distance travelled by the toothed rack 180 is long. Thus, a transmission ratio in an initial position, where the connecting element 110 is away from the gearbox 200, as shown in figure 2, is larger than that in a final position where the connecting element 110 is close to the gearbox 200, as shown in figure 3. Torque transferred to the connecting element 110 in therefore variable depending on which portion of the toothed curved surface 171 of the toothed element 170 is engaging which portion of the toothed surface 181 of the toothed rack 180. This is advantageous in changing gearshift positions requiring high torque such as when moving out of the parking gearshift position, P. Ball joint 190 allows angular movement of the connecting element 110.

The first driving gear 130 and the second driven gear 140 together define a first gear stage GS1. In said first gear stage GS1, the respective axes of rotation X1, X2 of the first driving gear 130 and the second driven gear 140 are parallel as shown in figures 1-3. A gear ratio of the first gear stage GS1 may be, for example, 1/2.6. On the other hand, the worm gear 150 and the third driven gear 160 both define a second gear stage GS2. In said second gear stage GS2, the respective axes of rotation X2, Y of the worm gear 150 and the third driven gear 160 are perpendicular as shown in figure 1. A gear ratio of the second gear stage GS2 may be, for example, 1/36. In general, the first and second gear stages GS1, GS2 are such that an overall gear ratio is within a range of 1/400 - 1/175. Thus, at the beginning of a connecting element stroke S, shown in figure 2, a greater force is exerted slowly by the gearbox actuator 100, while at the end of a connecting element stroke S, shown in figure 3, less force is exerted rapidly by the gearbox actuator 100. As stated above, this is advantageous when changing gearshift positions requiring high torque such as when moving out of the parking gearshift position, P, and also when changing gearshift positions requiring less torque are to be performed rapidly such as when moving from or into gearshift positions other than the parking gearshift position, P, and/or the reverse gearshift position, R.

Figure 4 shows a further embodiment of the present invention having a particular configuration for connecting the gearbox actuator 100 to the gearbox 200. In this embodiment, the shaft 115 comprises a first shaft element 300 and a second shaft element 350. The toothed rack 180 in this case is attached to the first shaft element 300. One end of the first shaft element 300 is attached to the control wire 118 such that both the first shaft element 300 and the control wire 118 can be displaced together within a first shaft guide 310 that is associated with the first shaft element 300. The first shaft guide 310 is in turn attached to a first conduit end fitting 320 that is fixed to the motor vehicle. The control wire 118 runs within a conduit that extends past the first conduit end fitting 320 into a second conduit end fitting 380 that is also fixed to the motor vehicle. Provision of first and second conduit end fittings 320, 380 fixed to the motor vehicle prevents conduit end fittings 320, 380 from moving to each other and thus the control wire 118 from bending when being compressed.

The second conduit end fitting 380 is attached to a second shaft guide 360. A second shaft element 350 is provided, one end of which is attached to the control wire 118 such that both the second shaft element 350 and the control wire 118 can be displaced together within the second shaft guide 360. The other end of the second shaft element 350 is attached to the gearbox end fitting 210.

It is to be noted that since the movement of the toothed rack 180 is linear, the first and second conduit end fittings 320, 380 are not necessary to allow the first and second shaft guides 310, 360 to swing. Also, at least one of the first and second shaft guides 310, 360 may be formed integral with the corresponding first and second conduit end fittings 320, 380. The gearbox actuator 100 is thus advantageously simplified resulting in cost reduction.

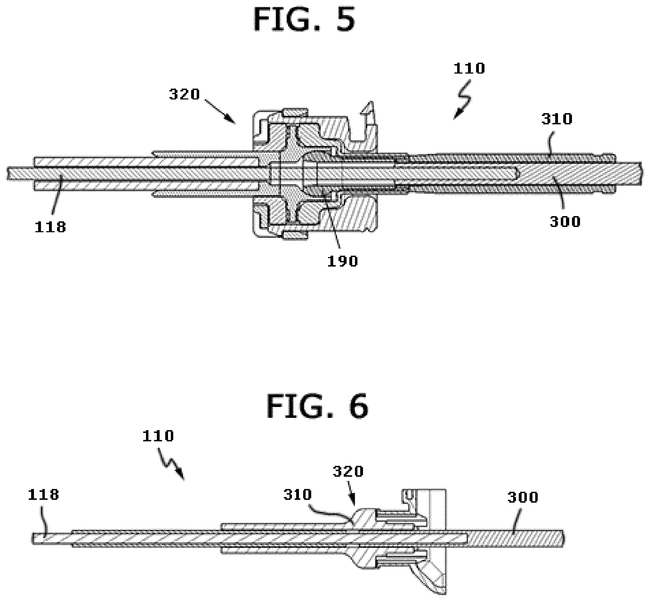

Figures 5 and 6 show embodiments of a part of the connecting element 110 between shaft element 300 and control wire 180 for connecting the gearbox actuator 100 to the gearbox 200.

In figure 5 a first embodiment of the first conduit end fitting 320 is shown. In said figure, the first shaft element 300 has a first end (not shown) attached to the toothed rack 180 and a second end attached to the control wire 118. The toothed rack 180 and the first shaft element 300 move together as stated above within the first shaft guide 310. The first shaft guide 310 is attached to the body of the first conduit end fitting 320 through a joint such that relative movement is allowed between the first shaft guide 310 and the first conduit end fitting 320. The first conduit end fitting 320, is in turn fixed to the motor vehicle. In the embodiment of figure 5 the joint comprises a ball joint 190. However, other types of joints may be also possible. The ball joint 190 allows the toothed rack 180 to be displaced linearly and also accommodating a slight lateral movement when in use.

In figure 6 a second embodiment of the first conduit end fitting 320 is shown. In said figure, the first shaft element 300 has a first end (not shown) attached to the toothed rack 180 and a second end attached to the control wire 118. The first shaft guide 310 is attached to the body of the first conduit end fitting 320 through no joint. Of course, other ways of attaching the first shaft guide 310 to the first conduit end fitting 320 are possible where no relative movement exists between the first shaft guide 310 and the first conduit end fitting 320.

The first conduit end fitting 320, is in turn fixed to the motor vehicle. In this case, the conduit end fitting 320 is an integral part acting itself as a guide for the shaft element 300.

## Claims

1. A gearbox actuator (100) for remotely actuating a gearbox (200) in a motor vehicle transmission, the gearbox actuator (100) comprising:
- a connecting element (110) for connecting the gearbox actuator (100) to the gearbox (200);
- a motor (120) arranged to drive a first driving gear (130) for transferring torque to the gearbox (200) through the connecting element (110);
- a second driven gear (140) engaging the first driving gear (130) and associated with a worm gear (150);
- a third driven gear (160) engaging the worm gear (150);
- a toothed element (170) attached to or formed integral with the third driven gear (160); and
- a toothed rack (180) extending along a rack extending axis (X) engaging the toothed element (170) and attached to the connecting element (110) to be displaced linearly;
**characterized in that** the toothed rack (180) comprises a toothed surface (181) that is inclined at an angle (a) with respect to the rack extending axis (X), and the toothed element (170) comprises a toothed curved surface (171) having a variable radius with respect to an axis of rotation (Y) of the third driven gear (160), such that the toothed rack (180) and the toothed element (170) define a variable pitch gearing.

2. The gearbox actuator (100) of claim 1, wherein the toothed element (170) has an eccentric configuration defining the toothed curved surface (171) having a major radius (R1) and a minor radius (R2) with respect to the axis of rotation (Y) of the third driven gear (160), and wherein when a portion of the toothed curved surface (171) of the toothed element (170) corresponding to the small radius (R2) is engaging the toothed surface (181) of the toothed rack (180), a distance travelled by the toothed rack (180) is short, and when a portion of the toothed curved surface (171) of the toothed element (170) corresponding to the major radius (R1) is engaging the toothed surface (181) of the toothed rack (180), a distance travelled by the toothed rack (180) is long.

3. The gearbox actuator (100) of claim 1 or 2, wherein a first gear stage (GS1) is defined by the first driving gear (130) and the second driven gear (140) which respective axes of rotation (X1, X2) are parallel and a second gear stage (GS2) is defined by the worm gear (150) and the third driven gear (160) whose respective axes of rotation (X2, Y) are perpendicular.

4. The gearbox actuator (100) of claim 3, wherein a gear ratio of the first gear stage (GS1) is within a range of 1/7- 1/1.5 and a gear ratio of the second gear stage (GS2) is within a range of 1/48 - 1/24.

5. The gearbox actuator of claim 3 or 4, wherein the first and second gear stages (GS1, GS2) are configured to provide an overall gear ratio within a range of 1/400 - 1/75 such that at the beginning of a connecting element stroke (S), greater force is exerted slowly by the gearbox actuator and at the end of the connecting element stroke (S), less force is exerted rapidly by the gearbox actuator.

6. The gearbox actuator (100) of any of the claims 1-5, wherein the toothed curved surface (171) has a major radius and a minor radius with respect to the axis of rotation (Y) of the third driven gear (160), said major radius being three times said minor radius.

7. The gearbox actuator (100) of any of the claims 1-6, wherein the toothed rack (180) is attached to the connecting element (110) through a joint (190).

8. The gearbox actuator (100) of any of the claims 1-7, wherein the connecting element (110) comprises a shaft (115).

9. The gearbox actuator of any of the claims 1-8, wherein the connecting element (110) comprises:
- a control wire (118) running within a conduit;
- and a shaft (115) comprising:
- a first shaft element (300) attached to the toothed rack (180) and to the control wire (118) and
- a second shaft element (350) attached to the control wire (118) and to a gearbox end fitting (210);
- first and second shaft guides (310, 360) within which the first and second shaft elements (300, 350) are allowed to move;
- first and second conduit end fittings (320, 380) attached to the first and second shaft guides (310, 360) respectively, the first and second conduit end fittings (320, 380) being fixed to the motor vehicle;
wherein the control wire conduit extends between the first and second conduit end fittings (320, 380).

10. The gearbox actuator (100) of claim 9, wherein the first shaft guide (310) is attached to the body of the first conduit end fitting (320) such that no relative movement exists between the first shaft guide (310) and the first conduit end fitting (320).

11. The gearbox actuator of any of the claims 1-10, wherein the toothed element is a toothed segment (170).

12. The gearbox actuator of any of the claims 1-11, wherein a pressure angle in the worm gear (150) is within the range of 10° - 16° and a pitch angle in the worm gear (150) is within a range of 5° - 15°.

13. The gearbox actuator of any of the claims 1-12, wherein a pressure angle in the first driving gear (130), the second driven gear (140), and the toothed element (170) is within a range of 14.5° - 25°.

14. The gearbox actuator of any of the claims 1-13, wherein the first driving gear (130) and the second driven gear (140) comprise helical gears.

15. The gearbox actuator of any of the claims 1-14, wherein the third driven gear (160) is arranged to rotate up to 140° to provide a linear stroke (S) of the connecting element (110) in a range of 20 - 50 mm.

## Patentansprüche

1. Ein Getriebeaktor (100) zum Fernbetätigen eines Getriebes (200) in einem Kraftfahrzeuggetriebe, wobei der Getriebeaktor (100) Folgendes umfasst:
- ein Verbindungselement (110) zum Verbinden des Getriebeaktors (100) mit dem Getriebe (200);
- einen Motor (120), der angeordnet ist, um ein erstes Antriebszahnrad (130) zum Übertragen von Drehmoment auf das Getriebe (200) durch das Verbindungselement (110) anzutreiben;
- ein zweites Antriebszahnrad (140), das mit dem ersten Antriebszahnrad (130) in Eingriff kommt und einem Schneckengetriebe (150) zugeordnet ist;
- ein drittes Antriebszahnrad (160), das mit dem Schneckengetriebe (150) in Eingriff kommt;
- ein gezahntes Element (170), das an dem dritten Antriebszahnrad (160) befestigt oder einstückig mit diesem ausgebildet ist; und
- eine sich entlang einer Zahnstangenverlaufsachse (X) erstreckende Zahnstange (180), die in das gezahnte Element (170) eingreift und an dem Verbindungselement (110) befestigt ist, um linear verschoben zu werden;
**dadurch gekennzeichnet, dass** die Zahnstange (180) eine Zahnfläche (181) umfasst, die mit einem Winkel (a) in Bezug auf die Zahnstangenverlaufsachse (X) geneigt ist, und das gezahnte Element (170) eine gezahnte gekrümmte Fläche (171) umfasst, die einen variablen Radius bezüglich einer Drehachse (Y) des dritten Antriebszahnrads (160) hat, so dass die Zahnstange (180) und das gezahnte Element (170) ein Verstellgetriebe definieren.

2. Der Getriebeaktor (100) des Anspruchs 1, wobei das gezahnte Element (170) eine exzentrische Konfiguration hat, welche die gezahnte gekrümmte Fläche (171) definiert, die einen Hauptradius (R1) und einen Nebenradius (R2) mit Bezug auf die Drehachse (Y) des dritten Antriebszahnrads (160) hat, und wobei, wenn ein Teil der gezahnten gekrümmten Fläche (171) des gezahnten Elements (170) entsprechend dem Nebenradiums (R2) in Eingriff mit der Zahnfläche (181) der Zahnstange (180) steht, eine durch die Zahnstange (180) zurückgelegte Entfernung kurz ist und, wenn ein Teil der gezahnten gekrümmten Fläche (171) des gezahnten Elements (170) entsprechend dem Hauptradius (R1) in Eingriff mit der Zahnfläche (181) der Zahnstange (180) steht, eine durch die Zahnstange (180) zurückgelegte Entfernung groß ist.

3. Der Getriebeaktor (100) des Anspruchs 1 oder 2, wobei eine erste Getriebestufe (GS1) durch das erste Antriebszahnrad (130) und das zweite Antriebszahnrad (140) definiert ist, deren jeweiligen Drehachsen (X1, X2) parallel sind und eine zweite Getriebestufe (GS2) durch das Schneckengetriebe (150) und das dritte Antriebszahnrad (160) definiert ist, deren jeweiligen Drehachsen (X2, Y) senkrecht sind.

4. Der Getriebeaktor (100) des Anspruchs 3, wobei ein Übersetzungsverhältnis der ersten Gangstufe (GS1) innerhalb eines Bereichs von 1/7 bis 1/1,5 liegt und ein Übersetzungsverhältnis der zweiten Gangstufe (GS2) innerhalb eines Bereichs von 1/48 bis 1/24 liegt.

5. Der Getriebeaktor des Anspruchs 3 oder 4, wobei die erste und die zweite Getriebestufe (GS1, GS2) konfiguriert sind, um ein Gesamtübersetzungsverhältnis innerhalb eines Bereichs von 1/400 bis 1/75 bereitzustellen, so dass zu Beginn eines Verbindungselementhubs (S), größere Kraft langsam vom Getriebeaktor ausgeübt wird und am Ende des Verbindungselementhubs (S) weniger Kraft schnell vom Getriebeaktor ausgeübt wird.

6. Der Getriebeaktor (100) von einem der Ansprüche 1 bis 5, wobei die gezahnte gekrümmte Fläche (171) einen Hauptradius und einen Nebenradius in Bezug auf die Drehachse (Y) des dritten Antriebszahnrads (160) hat, wobei der Hauptradius das Dreifache des Nebenradius beträgt.

7. Der Getriebeaktor (100) von einem der Ansprüche 1 bis 6, wobei die Zahnstange (180) an dem Verbindungselement (110) durch ein Gelenk (190) befestigt ist.

8. Der Getriebeaktor (100) von einem der Ansprüche 1 bis 7, wobei das Verbindungselement (110) eine Welle (115) umfasst.

9. Der Getriebeaktor von einem der Ansprüche 1 bis 8, wobei das Verbindungselement (110) Folgendes umfasst:
- einen Steuerdraht (118), der innerhalb einer Leitung verläuft;
- und eine Welle (115) umfassend:
- ein an der Zahnstange (180) und am Steuerdraht (118) befestigtes erstes Wellenelement (300) und
- ein an dem Steuerdraht (118) und an einem Getriebeendstück (210) befestigtes zweites Wellenelement (350);
- erste und zweite Wellenführungen (310, 360), innerhalb derer sich die ersten und zweiten Wellenelemente (300, 350) bewegen können;
- erste und zweite Leitungsendanschlüsse (320, 380), die an den ersten bzw. zweiten Wellenführungen (310, 360) befestigt sind, wobei die ersten und zweiten Leitungsendanschlüsse (320, 380) am Kraftfahrzeug befestigt sind;
wobei sich die Steuerdrahtleitung zwischen den ersten und zweiten Leitungsendanschlüssen (320, 380) erstreckt.

10. Der Getriebeaktor (100) des Anspruchs 9, wobei die erste Wellenführung (310) an dem Körper des ersten Leitungsendanschlusses (320) angebracht ist, sodass keine Relativbewegung zwischen der ersten Wellenführung (310) und dem ersten Leitungsendanschluss (320) gegeben ist.

11. Der Getriebeaktor von einem der Ansprüche 1 bis 10, wobei das gezahnte Element ein gezahntes Segment (170) ist.

12. Der Getriebeaktor von einem der Ansprüche 1 bis 11, wobei ein Eingriffswinkel im Schneckengetriebe (150) im Bereich von 10° bis 16° liegt und ein Teilkegelwinkel im Schneckengetriebe (150) im Bereich von 5° bis 15° liegt.

13. Der Getriebeaktor von einem der Ansprüche 1 bis 12, wobei ein Eingriffswinkel in dem ersten Antriebszahnrad (130), dem zweiten Antriebszahnrad (140) und dem gezahnten Element (170) innerhalb eines Bereichs von 14,5° bis 25° liegt.

14. Der Getriebeaktor von einem der Ansprüche 1 bis 13, wobei das erste Antriebszahnrad (130) und das zweite Antriebszahnrad (140) Schrägstirnräder umfassen.

15. Der Getriebeaktor von einem der Ansprüche 1 bis 14, wobei das dritte Antriebszahnrad (160) angeordnet ist, um bis zu 140° zu drehen, um einen linearen Hub (S) des Verbindungselements (110) in einem Bereich von 20 bis 50 mm bereitzustellen.

## Revendications

1. Un actionneur de boîte de vitesses (100) pour actionner à distance une boîte de vitesses (200) dans une transmission de véhicule à moteur, l'actionneur de boîte de vitesses (100) comprenant :
- un élément de liaison (110) pour relier l'actionneur de boîte de vitesses (100) à la boîte de vitesses (200) ;
- un moteur (120) agencé pour entraîner une première roue d'entraînement (130) pour transférer du couple à la boîte de vitesses (200) à travers l'élément de liaison (110) ;
- une deuxième roue d'entraînement (140) engageant la première roue d'entraînement (130) et associée à une vis sans fin (150) ;
- une troisième roue d'entraînement (160) engageant la vis sans fin (150) ;
- un élément denté (170) fixé à ou formé d'un seul tenant avec la troisième roue d'entraînement (160) ; et
- une crémaillère (180) s'étendant le long d'un axe d'extension de crémaillère (X) engageant l'élément denté (170) et fixée à l'élément de liaison (110) pour être déplacée linéairement ;
**caractérisé en ce que** la crémaillère (180) comprend une surface dentée (181) qui est inclinée d'un angle (a) par rapport à l'axe d'extension de crémaillère (X), et l'élément denté (170) comprend une surface courbe dentée (171) ayant un rayon variable par rapport à un axe de rotation (Y) de la troisième roue d'entraînement (160), de sorte que la crémaillère (180) et l'élément denté (170) définissent un engrenage à pas variable.

2. L'actionneur de boîte de vitesses (100) de la revendication 1, dans lequel l'élément denté (170) a une configuration excentrique définissant la surface courbe dentée (171) ayant un rayon majeur (R1) et un rayon mineur (R2) par rapport à l'axe de rotation (Y) de la troisième roue d'entraînement (160), et dans lequel, lorsqu'une partie de la surface courbe dentée (171) de l'élément denté (170) correspondant au rayon mineur (R2) est en prise avec la surface dentée (181) de la crémaillère (180), une distance parcourue par la crémaillère (180) est courte et, lorsqu'une partie de la surface courbe dentée (171) de l'élément denté (170) correspondant au rayon majeur (R1) est en prise avec la surface dentée (181) de la crémaillère (180), une distance parcourue par la crémaillère (180) est longue.

3. L'actionneur de boîte de vitesses (100) de la revendication 1 ou 2, dans lequel un premier étage d'engrenage (GS1) est défini par la premier roue d'entraînement (130) et la deuxième roue d'entraînement (140) dont les axes de rotation respectifs (X1, X2) sont parallèles, et un deuxième étage d'engrenage (GS2) est défini par la vis sans fin (150) et la troisième roue d'entraînement (160) dont les axes de rotation respectifs (X2, Y) sont perpendiculaires.

4. L'actionneur de boîte de vitesses (100) de la revendication 3, dans lequel un rapport d'engrenage du premier étage d'engrenage (GS1) est dans une plage de 1/7 à 1/1,5 et un rapport d'engrenage du deuxième étage d'engrenage (GS2) est dans une plage de 1/48 à 1/24.

5. L'actionneur de boîte de vitesses de la revendication 3 ou 4, dans lequel les premier et deuxième étages d'engrenage (GS1, GS2) sont configurés pour fournir un rapport d'engrenage global dans une plage de 1/400 à 1/75, de telle sorte qu'au début d'une course de l'élément de liaison (S) une force plus importante est exercée lentement par l'actionneur de boîte de vitesses et à la fin de la course de l'élément de liaison (S) une force moindre est exercée rapidement par l'actionneur de boîte de vitesses.

6. L'actionneur de boîte de vitesses (100) de l'une quelconque des revendications 1 à 5, dans lequel la surface courbe dentée (171) a un rayon majeur et un rayon mineur par rapport à l'axe de rotation (Y) de la troisième roue d'entraînement (160), ledit rayon majeur étant trois fois ledit rayon mineur.

7. L'actionneur de boîte de vitesses (100) de l'une quelconque des revendications 1 à 6, dans lequel la crémaillère (180) est fixée à l'élément de liaison (110) par l'intermédiaire d'un joint (190).

8. L'actionneur de boîte de vitesses (100) de l'une quelconque des revendications 1 à 7, dans lequel l'élément de liaison (110) comprend un arbre (115).

9. L'actionneur de boîte de vitesses de l'une quelconque des revendications 1 à 8, dans lequel l'élément de liaison (110) comprend :
- un fil de commande (118) passant à l'intérieur d'un conduit ;
- et un arbre (115) comprenant :
- un premier élément d'arbre (300) fixé à la crémaillère (180) et au fil de commande (118) et
- un deuxième élément d'arbre (350) fixé au fil de commande (118) et à un raccord d'extrémité de boîte de vitesses (210);
- des premier et deuxième guides d'arbre (310, 360) à l'intérieur desquels les premier et deuxième éléments d'arbre (300, 350) peuvent se déplacer ;
- des premier et second raccords d'extrémité de conduit (320, 380) fixés respectivement aux premier et second guides d'arbre (310, 360), les premier et second raccords d'extrémité de conduit (320, 380) étant fixés au véhicule à moteur ;
dans lequel le conduit de fil de commande s'étend entre les premier et second raccords d'extrémité de conduit (320, 380).

10. L'actionneur de boîte de vitesses (100) de la revendication 9, dans lequel le premier guide d'arbre (310) est fixé au corps du premier raccord d'extrémité de conduit (320) de telle sorte qu'aucun mouvement relatif n'existe entre le premier guide d'arbre (310) et le premier raccord d'extrémité de conduit (320).

11. L'actionneur de boîte de vitesses de l'une quelconque des revendications 1 à 10, dans lequel l'élément denté est un segment denté (170).

12. L'actionneur de boîte de vitesses de l'une quelconque des revendications 1 à 11, dans lequel un angle de pression dans la vis sans fin (150) est dans la plage de 10° à 16° et un angle de pas dans la vis sans fin (150) est dans une plage de 5° à 15°.

13. L'actionneur de boîte de vitesses de l'une quelconque des revendications 1 à 12, dans lequel un angle de pression dans la première roue d'entraînement (130), la deuxième roue d'entraînement (140) et l'élément denté (170) se situe dans une plage de 14,5° à 25°.

14. L'actionneur de boîte de vitesses de l'une quelconque des revendications 1 à 13, dans lequel la premier roue d'entraînement (130) et la deuxième roue d'entraînement (140) comprennent des engrenages hélicoïdaux.

15. L'actionneur de boîte de vitesses de l'une quelconque des revendications 1 à 14, dans lequel le troisième roue d'entraînement (160) est agencée pour tourner jusqu'à 140° pour fournir une course linéaire (S) de l'élément de liaison (110) dans une plage de 20 à 50 mm.
